(19) Europäisches Patentamt
European Patent Office
Office européen des brevets

(11) Publication number: 0 010 346
B1

(12) # EUROPEAN PATENT SPECIFICATION

(45) Date of publication of patent specification: 12.10.83

(51) Int. Cl.³: C 08 L 23/00, C 08 K 5/10, C 08 K 5/52

(21) Application number: 79301686.6

(22) Date of filing: 17.08.79

(54) **Polyolefins stabilized against light-induced degradation and a light stabilizer composition therefor.**

(30) Priority: 13.10.78 US 951230

(43) Date of publication of application: 30.04.80 Bulletin 80/9

(45) Publication of the grant of the patent: 12.10.83 Bulletin 83/41

(84) Designated Contracting States: AT BE CH DE FR GB IT LU NL SE

(56) References cited:
BE - A - 849 782
FR - A - 2 106 095
FR - A - 2 389 652
US - A - 3 681 431

(73) Proprietor: AMERICAN CYANAMID COMPANY
Berdan Avenue
Wayne New Jersey 06904 (US)

(72) Inventor: Stretanski, Joseph Anthony
62 Lakeview Avenue
Clinton, New Jersey (US)

(74) Representative: Allam, Peter Clerk et al,
LLOYD WISE, TREGEAR & CO. Norman House
105-109 Strand
London WC2R 0AE (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

# Polyolefins stabilized against light-induced degradation and a light stabilizer composition therefor

The present invention relates to the stabilization of poly-$\alpha$-olefins, particularly polypropylene, against light-induced deterioration, and to a light stabilizer composition therefor.

More specifically, the present invention provides light stabilizer compositions, which exhibit enhanced light stability in poly-$\alpha$-olefins, comprising a combination of (a) n-hexadecyl 3,5-di-t.butyl-4-hydroxybenzoate and (b) a dialkyl pentaerythrityl diphosphite compound, represented by the formula:

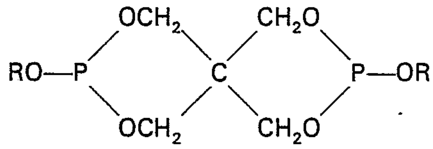

wherein R is an alkyl group containing from 8 to 20 carbon atoms. Further enhancement of the light stability arises from adding to the above combination a benzophenone or benzotriazole compound.

The invention provides light stabilizer compositions, as defined, and light stabilized poly-$\alpha$-olefin compositions containing from 0.1 to 2.0 percent by weight thereof of the light stabilizer composition.

Neither the alkyl esters nor the aryl esters of 3,5-di-t.butyl-4-hydroxybenzoic acid are, when used alone, completely satisfactory light stabilizers for polyolefins.

The compositions of the invention, however, provide good light stability to poly-$\alpha$-olefins, particularly polypropylene. As is illustrated in the Example below, the present light stabilizer compositions provide enhanced light stability as compared with either component used alone at the same concentration, or over combinations of n-hexadecyl 3,5-di-t.butyl-4-hydroxybenzoate with other known phosphite esters, or over aryl esters of 3,5-di-t.butyl-4-hydroxybenzoic acid with known phosphites, including dialkyl pentaerythrityl diphosphites.

n-Hexadecyl 3,5-di-t.butyl-4-hydroxybenzoate is a known compound. It may be prepared in accordance with procedures described in U.S. Patent 3,681,431, for the preparation of the n-octadecyl ester, except that n-hexadecanol is used instead of n-octadecanol.

The dialkyl pentaerythrityl diphosphites are also known compounds and are described in U.S. Patent 3,205,250, particularly column 7, lines 25—43, and in Examples 9—13 therein. The dialkyl pentaerythrityl diphosphites contain $C_8$—$C_{20}$ alkyl groups, and preferably contain $C_{12}$—$C_{20}$ alkyl groups, representative of which are diisodecyl pentaerythrityl diphosphite, distearyl pentaerythrityl diphosphite, dilauryl pentaerythrityl diphosphite, and the like. Distearyl pentaerythrityl diphosphite, available commercially as Weston 618 (Weston Chem. Co.) is the most preferred diphosphite.

Effective stabilization of the polyolefin is achieved by the incorporation therein of 0.1 to 2 percent by weight of the light stabilizer combination of the invention, and preferably from 0.25 to 1 percent by weight.

The weight ratio of the n-hexadecyl ester of 3,5-di-t.butyl-4-hydroxybenzoic acid to the dialkyl pentaerythrityl diphosphite in the light stabilizer combination will preferably be such as to minimize the amount of the phosphite ester. In general, however, effective weight ratios will vary from 1:1 to 5:1 (ester:phosphite).

The stabilizer composition of the invention may also contain a benzophenone or benzotriazole light stabilizer to provide further enhancement of activity. In this case the benzophenone or benzotriazole is added in an amount of from 0.1 to 1 percent by weight, based on the weight of the polymer, with the ratio of n-hexadecyl ester to benzophenone or benzotriazole being 1/1 to 5/1. Representative benzophenones include 2 - hydroxy - 4 - octyloxybenzophenone, 2 - hydroxy - 4 - dodecyloxybenzophenone, 2 - hydroxy - 4 - n - hexyloxybenzophenone, 2 - hydroxy - 4 - methoxybenzophenone, 2,2' - dihydroxy - 4,4' - dimethoxybenzophenone, 2,2' - dihydroxy - 4 - methoxybenzophenone, and the like; representative benzotriazoles include 2 - (2' - hydroxy - 5' - methylphenyl)benzotriazole, 2 - (3' - tert.butyl - 2' - hydroxy - 5' - methylphenyl) - 5 - chlorobenzotriazole, 2 - (3',5' - di - tert.butyl - 2' - hydroxyphenyl) - 5 - chlorobenzotriazole, 2 - (2' - hydroxy - 5' - tert.octylphenyl)benzotriazole, 2 - (3',5' - di - tert.amyl - 2' - hydroxyphenyl)benzotriazole, and the like.

The polyolefins stabilized in accordance with the invention are poly-$\alpha$-olefins, particularly polypropylene, and include low and high density polyethylene, polybutylene, and copolymers of ethylene and propylene and ethylene and butylene, and the like.

The stabilizer composition may be incorporated into the polyolefin by any of the means well-known in the art for such purpose, including dry blending of the additive with the polyolefin in powder or granular form, followed by milling, Banbury mixing, molding, casting, etc. Also, in accordance with conventional practice, the compositions may include other stabilizers, such as thermal processing anti oxidants, lubricants, fillers, pigments and dyes, anti-static agents, and the like.

The thermal processing antioxidants which may be used alone or in combinations are used in

conventional effective amounts, i.e. up to about 2 percent by weight. Suitable compounds include such as:

2,2′ - thiobis - (4 - methyl - 6 - tert.-butylphenol); 4,4′ - thiobis - (3 - methyl - 6 - tert.-butylphenol); 2,2′ - methylene - bis - (4 - methyl - 6 - tert.-butylphenol); 2,2′ - methylene - bis - (4 - ethyl - 6 - tert.-butylphenol); 4,4′ - methylene - bis - (2 - methyl - 6 - tert.-butylphenol); 4,4′ - butylidine - bis - (3 - methyl - 6 - tert.-butylphenol); 2,2′ - methylene - bis - [4 - methyl - 6 - ($\alpha$ - methylcyclohexyl) - phenol]; 2,6 - di - (2′ - hydroxy - 3′ - tert.-butyl - 5′ - methylbenzyl) - 4 - methylphenol; 1,1,3 - tris - (4′ - hydroxy - 2′ - methyl - 5′ - tert.-butylphenyl) - butane; 1,3,5 - trimethyl - 2,4,6 - tri - (3,5′ - ditert.-butyl - 4′ - hydroxybenzyl) - benzene; esters of $\beta$ - 4 - hydroxy - 3,5 - ditert.-butylphenylpropionic acid with mono- or polyvalent alcohols such as methanol, octadecanol, hexanediol, nonanediol, trimethylolethane or pentaerythritol; 2,4 - bis - octyl - mercapto - 6 - (4 - hydroxy - 3,5 - ditert.-butylanilino) - s - triazine; 2,4 - bis - (4 - hydroxy - 3,5 - ditert.-butylphenoxy) - 6 - octyl - mercapto - s - triazine; 1,1 - bis - (4′ - hydroxy - 2′ - methyl - 5′ - tert.butyl) - phenyl - 3 - dodecylmercaptobutane; 4 - hydroxy - 3,5 - ditert.-butylbenzylphosphonic acid esters such as the diethyl or dioctadecyl ester; (3 - methyl - 4 - hydroxy - 5 - tert.-butylbenzyl) - malonic acid dioctadecyl ester; S - (3,5 - dimethyl - 4 - hydroxybenzyl) thioglycolic acid - octadecyl ester.

## Example

Unstabilized powdered polypropylene (Profax 6401—Hercules; 100 parts by weight) was dry blended with two thermal processing antioxidants (0.05 part by weight of 2,6-di-t. butyl-4-methyl phenol and 0.05 part by weight of n-octadecyl 3,5-di-t.butyl-4-hydroxyhydrocinnamate) 0.1 part by weight of calcium stearate, and the light stabilizers shown in the accompanying table. The compositions were then extruded at a maximum extrusion temperature of 440°F and pelletized. The pellets were then extruded into fibers at a maximum temperature of 485°F using a draw ratio of 7/1. The fibers were exposed to a Xenon arc in a Weather-O-Meter and periodically tested for tensile (break) strength. The data shown in the table represent the time in hours for the fiber to lose 50% of its original tensile (break) strength.

TABLE

| | Additive | Hours to 50% of Original Strength<br>Xenon Weather-O-Meter |
|---|---|---|
| a. | None | 550 |
| b. | Ester (A), 0.5% | 2290 |
| c. | Diphosphite (B), 0.5% | 1560 |
| d. | (A), 0.25% + (B), 0.25% | 3460* |
| e. | Ester (C), 0.5% | 2370 |
| f. | (C), 0.25% + (B), 0.25% | 2330 |

*This invention

Ester (A) = n-hexadecyl 3,5-di-t.butyl-4-hydroxybenzoate

Ester (C) = 2,4-di-t.butylphenyl 3,5-di-t.butyl-4-hydroxybenzoate

Diphosphite (B) = distearyl pentaerythrityl diphosphite

The data show the unexpected enhancement of light stabilization by the combination of the invention (d) over either component alone (b) and (c), as well as over the aryl ester alone (e) or in combination with distearyl pentaerythrityl diphosphite (f).

## Claims

1. A poly-$\alpha$-olefin composition comprising from 0.1 to 2.0 percent by weight thereof of a light stabilizer combination of (a) n-hexadecyl 3,5-di-t.butyl-4-hydroxybenzoate and (b) a dialkyl pentaerythrityl diphosphite represented by the formula:

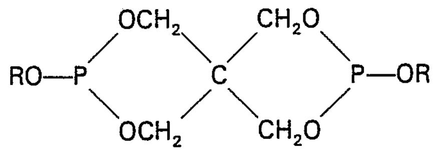

wherein R is alkyl of 8 to 20 carbon atoms.

2. A composition according to Claim 1, wherein said poly-$\alpha$-olefin is polypropylene.

3. A composition according to Claim 1 or Claim 2, wherein said R is alkyl of 12 to 20 carbon atoms.

4. A composition according to any preceding claim, wherein the weight ratio of (a) to (b) is in the range 1:1 to 5:1.

5. A composition according to any preceding claim, containing 0.25 to 1 percent by weight of said light stabilizer composition.

6. A composition according to any preceding claim, further containing 0.1 to 1% by weight of a benzophenone or benzotriazole compound.

7. A light stabilizer composition for the stabilization of polyolefins against degradation induced by Lichtstabilisatorkombination aus (a) n-Hexadecyl-3,5-di-tert.-butyl-4-hydroxybenzoat und (b) einem pentaerythrityl diphosphite represented by the formula:

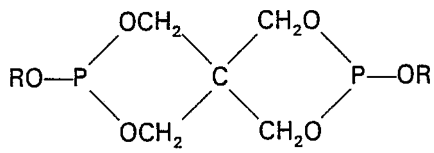

wherein R is alkyl of 8 to 20 carbon atoms.

8. A light stabilizer composition according to Claim 7, wherein said R is alkyl of 12 to 20 carbon atoms.

9. A light stabilizer composition according to Claim 7 or Claim 8, wherein the ratio of (a) to (b) is in the range 1:1 to 5:1.

10. A light stabilizer composition according to any one of Claims 7—9, further containing 0.1 to 1% by a benzophenone or benzotriazole compound.

## Revendications

1. Une composition à base de poly-$\alpha$-oléfine comprenant de 0,1 à 2% en poids d'une combinaison stabilisatrice vis-à-vis de la lumière comprenant (a) du 3,5-di-t.butyl-4-hydroxybenzoate de n-hexadécyle et (b) un diphosphite de dialkylpentaérythrityle représenté par la formule

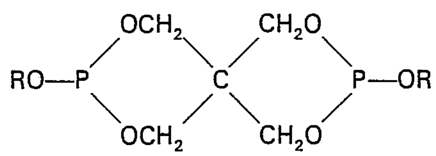

où R est un groupe alkyle ayant de 8 à 20 atomes de carbone.

2. Une composition selon la revendication 1 dans laquelle ladite poly-$\alpha$-oléfine est le polypropylène.

3. Une composition selon la revendication 1 ou la revendication 2 dans laquelle ledit groupe R est un groupe alkyle en $C_{12}$ à $C_{20}$.

4. Une composition selon l'une quelconque des revendications précédentes, dans laquelle le rapport pondéral de (a) à (b) est dans la gamme 1:1 à 5:1.

5. Une composition selon l'une quelconque des revendications précédentes contenant de 0,25 à 1% en poids de ladite composition stabilisatrice vis-à-vis de la lumière.

6. Une composition selon l'une quelconque des revendications précédentes contenant en plus 0,1 à 1% en poids d'un composé de benzophénone ou de benzotriazole.

7. Une composition stabilisatrice vis-à-vis de la lumière pour la stabilisation des polyoléfines vis-à-vis de la dégradation induite par la lumière caractérisée par un mélange de (a) 3,5-di-t.butyl-4-hydroxybenzoate de n-hexadécyle, (b) un diphosphite de dialkyl pentaérythrityle représenté par

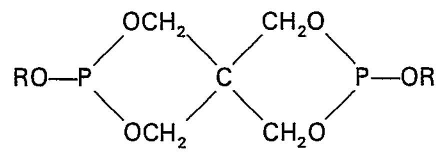

où R est un groupement alkyle ayant de 8 à 20 atomes de carbone.

8. Une composition stabilisatrice vis-à-vis de la lumière selon la revendication 7 dans laquelle R est un groupe alkyle en $C_{12}$ à $C_{20}$.

9. Une composition stabilisatrice vis-à-vis de la lumière selon la revendication 7 ou la revendication 8 dans laquelle le rapport de (a) à (b) est dans la gamme 1:1 à 5:1.

10. Une composition stabilisatrice vis-à-vis de la lumière selon l'une quelconque des revendications 7 à 9 qui contient de plus de 0,1 à 1% en poids d'un composé de benzophénone ou de benzotriazole.

**Patentansprüche**

1. Eine Poly-$\alpha$-olefin-Masse, umfassend von 0,1 bis 2,0 Gew.-%, bezogen auf dieselbe, einer Lichtstabilisatorkombination aus (a) n-Hexadecyl-3,5-di-tert.-butyl-4-hydroxybenzoat und (b) einem Dialkylpentaerythrit-diphosphit gemäß der Formel:

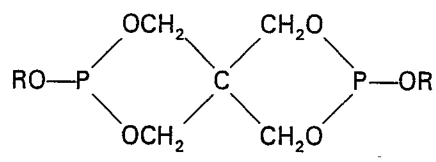

wobei R für Alkyl mit 8 bis 20 Kohlenstoffatomen steht.

2. Masse nach Anspruch 1, dadurch gekennzeichnet, daß das Poly-$\alpha$-olefin Polypropylen ist.

3. Masse nach Anspruch 1 oder Anspruch 2, dadurch gekennzeichnet, daß R für $C_{12-20}$-Alkyl steht.

4. Masse nach einem der vorstehenden Ansprüche, dadurch gekennzeichnet, daß das Gewichtsverhältnis von (a) zu (b) im Bereich von 1:1 bis 5:1 liegt.

5. Masse nach einem der vorstehenden Ansprüche, dadurch gekennzeichnet, daß sie 0,25 bis 1 Gew.-% der Lichtstabilisatormischung enthält.

6. Masse nach einem der vorstehenden Ansprüche, dadurch gekennzeichnet, daß sie außerdem 0,1 bis 1 Gew.-% einer Benzophenon- oder Benzotriazol-Verbindung enthält.

7. Lichtstabilisatormischung zur Stabilisierung von Polyolefinen gegen durch Licht induzierten Abbau, gekennzeichnet durch ein Gemisch von (a) n-Hexadecyl-3,5-di-tert.-butyl-4-hydroxybenzoat und (b) einem Dialkylpentaerythritdiphosphit der Formel:

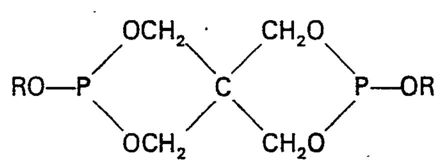

wobei R für Alkyl mit 8 bis 20 Kohlenstoffatomen steht.

8. Lichtstabilisatormischung nach Anspruch 7, dadurch gekennzeichnet, daß R für $C_{12-20}$-Alkyl steht.

9. Lichtstabilisatormischung nach einem der Ansprüche 7 oder 8, dadurch gekennzeichnet, daß das Verhältnis von (a) zu (b) im Bereich von 1:1 bis 5:1 liegt.

10. Lichtstabilisatormischung nach einem der Ansprüche 7 bis 9, dadurch gekennzeichnet, daß sie außerdem 0,1 bis 1 Gew.-% einer Benzophenon- oder Benzotriazol-Verbindung enthält.